# NEUE EUROPÄISCHE PATENTSCHRIFT

(11) **EP 1 646 492 B2**
(45) Veröffentlichungstag und Bekanntmachung des Hinweises auf die Entscheidung über den Einspruch: **17.01.2018**
(45) Hinweis auf die Patenterteilung: 16.09.2009
(21) Anmeldenummer: 04741161.6
(22) Anmeldetag: 20.07.2004
(51) Int. Cl.: B29C 63/22, B32B 38/06, B32B 37/10, B60R 13/02

(54) **INNENAUSSTATTUNGSKOMPONENTEN VON KRAFTFAHRZEUGEN MIT EINEM DEFINIERTEN OBERFLÄCHENPROFIL**
INTERNAL FITTING COMPONENTS OF MOTOR VEHICLE ELEMENTS WITH A DEFINED SURFACE PROFILE
ELEMENTS DE GARNITURE INTERIEURE POUR VEHICULES AUTOMOBILES PRESENTANT UN PROFIL DE SURFACE DEFINI

(30) Priorität: 22.07.2003 DE 10333161
(43) Veröffentlichungstag der Anmeldung: 19.04.2006
(73) Patentinhaber: Toyota Boshoku Kabushiki Kaisha, Kariya-shi, Aichi 448-8651 (JP)
(72) Erfinder: HÖLZEL, Lominik, 82178 Puchheim (DE); GUTT, Stefan, 83661 Lenggries (DE); DITTRICH, Alfred, 82515 Wolfratshausen (DE)
(74) Vertreter: dompatent von Kreisler Selting Werner - Partnerschaft von Patent- und Rechtsanwälten mbB
(86) Internationale Anmeldenummer: PCT/EP2004/008084
(87) Internationale Veröffentlichungsnummer: WO 2005/009721

(56) Entgegenhaltungen:
- EP-A- 0 256 803
- EP-A- 0 816 051
- EP-A- 1 147 875
- EP-A2- 1 284 182
- WO-A1-96//36666
- DE-A- 19 706 712
- DE-C2- 4 429 355
- DE-U1- 29 507 067
- US-A- 5 614 285
- US-A- 5 868 890
- BUERKLE E ET AL: "GROSSFLAECHIGE BAUTEILE IM URFORMWERKZEUG KASCHIEREN" KUNSTSTOFFE, CARL HANSER VERLAG. MUNCHEN, DE, Bd. 82, Nr. 10, 1. Oktober 1992 (1992-10-01), Seiten 896-901, XP000310142 ISSN: 0023-5563

## Beschreibung

Gegenstand der Erfindung ist ein Verfahren zur Herstellung von Innenausstattungskomponenten von Kraftfahrzeugen mit einem definierten Oberflächenprofil.

DE 44 47 645 C2 betrifft ein Verfahren zum Herstellen eines Formteiles, insbesondere einer Innenverkleidung oder dergleichen für Kraftfahrzeuge, hergestellt aus einer mit einem thermoplastischen Harz vorimprägnierten Vliesmatte, bei dem die Vliesmatte über die Erweichungstemperatur des thermoplastischen Harzes hinaus in einer Kontaktheizpresse flächig erwärmt und vorverdichtet und diese Vliesmatte unter hohem Druck und einer Temperatur von 100 bis 130 °C in einer Heißdruckform verpresst wird und das verpresste Formteil in mindestens einer Kühlstufe gekühlt wird, wobei in dieser mindestens einer Kühlstufe zumindest ein Kontaktdruck zwischen der Kühlform und dem geformten Formteil aufrecherhalten wird, wobei auf das verpresste Formteil eine Folie oder sonstiges Dekormaterial aufkaschiert wird, indem die Folie oder sonstiges Dekormaterial sowie die zu kaschierende Oberfläche des Formteils durch Kontaktwärme erhitzt und unter geringem Druck aneinandergelegt werden, woraufhin das mit der Kaschierfolie oder sonstigen Dekormaterial versehene verpresste Formteil abgekühlt wird.

DE 44 00 388 C2 betrifft ein Verfahren zum Herstellen eines Formteils 2, insbesondere eines Verkleidungsteils für ein Kraftfahrzeug, aus mindestens einer Trägerschicht 4 und einer Kaschierschicht 3, bei dem die flachen Schichten 3,4 in paralleler Erstreckung aufeinander ausgerichtet und die Ränder 5 und 6 im Abstand voneinander gehalten werden, während der Rand 5 abgetrennt wird, und die Schichten 4 und 3 unter gegenseitigen Verbindungen zwischen zwei Pressformflächen zusammengepresst werden, worauf der gegenüber dem bearbeitenden Rand 5' der Trägerschicht 4 angelegt und an dieser befestigt wird, dadurch gekennzeichnet, dass unmittelbar nach dem Abtrennen des Randes 5 der Trägerschicht 4 und dem Zusammenpressen der beiden Schichten 3,4 der vorstehenden Rand 6 der Kaschierschicht 3 um den bearbeitenden Rand 5' umgelegt und an die Rückseite der Trägerschicht 4 angedrückt wird, während das Formteil 2 mit seiner Vorderseite noch an der zugeordneten Pressformfläche anliegt.

DE 196 07 781 A1 betrifft Ausstattungsteile für Automobile, die meist Schichtstoffe sind mit einer Basis und einem textilen Dekor. Aus technologischen Gründen besteht dieses bisher aus Polyesterfasern. Zur Reduzierung der Anzahl der Polymeren in einem besonderen Gesamtaufbau werden demgegenüber Polypropylenfasern eingesetzt. Ermöglicht wird dies durch ein neues Kaschierverfahren und spezieller Wärmeführung im Prozess und Kaschiervorlage des Dekors.

WO 90/03256 betrifft eine Vorrichtung und ein Verfahren zum Herstellen fester Produkte mit definierter Oberfläche aus einem faserverstärkten Bauteilträger 10, die in einem One-Step-Verfahren mit Zykluszeiten von 40 bis 60 s verpresst werden.

WO 01/41999 A1 betrifft ein Verfahren zur Herstellung von Innenausstattungs-Komponenten von Kraftfahrzeugen mit einem definierten Oberflächenprofil, wobei man in einem ersten Schritt einen, den die sichtbare Oberfläche bildenden Werkstoff 1 in einer Werkzeugkavität positioniert und durch Einwirkung von Druck und/oder Temperatur verformt und gleichzeitig die gewünschte Oberflächenprägung erzeugt, in einem weiteren Schritt einen Trägerwerkstoff 2 auf der Basis von naturfaserverstärkten Polymerwerkstoffen in die Werkzeugkavität einbringt und anschließend verformt, wobei Randbereiche des Werkstoffs 1 nicht mit dem Trägerwerkstoff 2 bedeckt sind und anschließend nach Umbugen der Randbereiche des Werkstoffs 1 die Innenausstattungskomponenten aus der Werkzeugkavität entformt.

Sämtlichen Verfahren des Standes der Technik, wie US-A-5 614 285 **oder** EP 1 284 182 A2, ist gemeinsam, dass sowohl der Bauträger als auch die Dekorschicht auf eine Kaschiertemperatur gebracht werden, um die beiden Teile miteinander zu verbinden.

Dementsprechend bestand die Aufgabe der vorliegenden Erfindung in der Bereitstellung eines verbesserten Verfahrens zur Herstellung von Innenausstattungskomponenten von Kraftfahrzeugen.

Die vorgenannte Aufgabe der vorliegenden Erfindung wird gelöst durch ein Verfahren zur Herstellung von Innenausstattungskomponenten von Kraftfahrzeugen aus einem Bauteilträger 1 und einer damit verbundenen **Schaumstoff-kaschierten-Kunststofffolie** 2 mit definiertem Oberflächenprofil, wobei man

in einem ersten Schritt den Bauteilträger 1 auf der Basis von naturfaserverstärkten Polymerwerkstoffen **durch separate Ausformung** herstellt und dessen Oberflächentemperatur auf der mit der Dekorschicht 2 **(Kunststofffolie)** zu versehenen Oberfläche auf die gewünschte Kaschiertemperatur im Bereich von 150 bis 180 °C einstellt,

in einem zweiten Schritt die Sichtseite 3 der Dekorschicht 2 **(Kunststofffolie)** auf die gewünschte Narbtemperatur im Bereich von 200 bis 220 °C und die Kaschierseite 4 der Dekorschicht 2 **(Kunststofffolie)** auf die gewünschte Kaschiertemperatur bringt und

anschließend den Bauteilträger 1 und die Dekorschicht 2 **(Kunststofffolie)** in einem Werkzeug verpresst, dessen Oberwerkzeug 5 eine Struktur des definierten Oberflächenprofils aufweist.

Die Vorteile des erfindungsgemäßen Verfahrens bestehen insbesondere darin, dass eine weitaus höhere Steifigkeit des Bauteilträgers 1 aufgrund der separaten Ausformung erzielt werden kann. Im Werkzeug können nun deutliche Radienüberhöhungen vorgesehen werden, dies ermöglicht die Darstellung sehr enger Radien im Bereich ab 0,6 mm, insbesondere 2 bis 3 mm. Hervorzuheben ist auch, dass aufgrund der geringen Druckbelastung des zu kaschierenden Dekormaterials 2 **(Kunststofffolie)** die Schaumschädigung wesentlich geringer ist und dadurch Schaumbruch und Faltenproblematik ausgeschlossen werden kann. Besonders an den Radien, wie am übrigen Bauteil, wird durch das erfindungsgemäße Verfahren ein wesentlich verbesserter Softtouch erzielt. Im Vergleich der Verfahren des Standes der Technik kann die Bauteilkante wesentlich geradliniger gestaltet werden, so dass ein geringeres Spaltmaß zum Türblech eingehalten werden kann. Gleichzeitig ist auch eine Narbung an diesem scharfkantigen Umbugradius möglich. Mit Hilfe der vorliegenden Erfindung ist darüber hinaus bei der Darstellung einer Galvano/Laser-Narbe, beispielsweise ausgehend von einem Belederungsmodel, die Realisierung eines Zweiglanzes möglich.

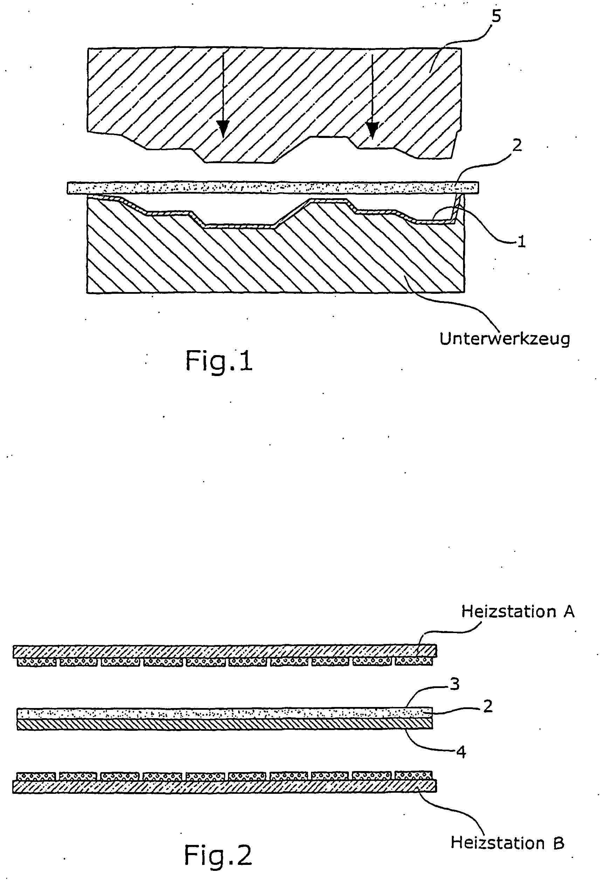

Kern der Erfindung ist ein Verfahren zur Herstellung von Kraftfahrzeug-Innenausstattungskomponenten, die sich durch eine besonders hochwertige Oberflächengestaltung auszeichnen. Im ersten Schritt wird, wie in Fig. 1 dargestellt, ein Bauteilträger 1 hergestellt, der durch überhöhte, scharfe Radien und hohe Festigkeitswerte gekennzeichnet sein kann. Weiter wird der Bauteilträger 1 auf der zu beschichtenden Seite auf Kaschiertemperatur gebracht. Dies kann kontaktlos über Strahler oder über ein geeignetes Heizwerkzeug erfolgen. Parallel zum Aufheizen des Bauteilträgers 1, wird wie in Fig. 2 beschrieben, die Dekorschicht 2 aufgeheizt.

Dabei wird die Sichtseite 3 der Dekorschicht 2 auf Narbtemperatur und dessen Kaschierseite 4 auf Verschweiß- bzw. Verklebtemperatur gebracht, wobei die Heizsegmente der Heizstationen A und B separat regelbar sind. Die notwendigen Temperaturen sind naturgemäß vom verwendeten Material abhängig. Die Prägnanz der Oberfläche wird durch die Strukturierung der A-Seite in einem genarbten Oberwerkzeug dadurch erreicht, dass die erhitzte Dekorschicht 2 durch den vorgeformten Bauteilträger 1 in das temperierte Oberwerkzeug 5 gepresst wird. Über den Kaschierdruck wird die im temperierten Oberwerkzeug 5 hinterlegte Struktur in die heiße Dekorschicht 2 übertragen. Der dazu erforderliche Prägedruck ist im Vergleich zur Schaumfestigkeit gering, so dass ein hohes Maß an Weichheit des Schaums erhalten werden kann. Die genarbte Oberwerkzeugkavität 5 ist vorzugsweise so gestaltet, dass über geeignete Kanäle, Auslässe eine offenporige Struktur der beim Kaschieren entstehende Luftraum zwischen Dekorschicht 2 und Oberwerkzeug 5 entlüftet wird. Die Entlüftung kann sowohl mit Unterdruck bzw. über den Kaschierdruck erfolgen. Eine Haltevorrichtung für die Dekorschicht 2 sollte so ausgelegt sein, dass ein lokales, definiertes Nachrutschen des Materials möglich ist, was zu hochwertigen Kaschierergebnissen führt.

In einer besonders bevorzugten Ausführungsform der vorliegenden Erfindung ist das erfindungsgemäße Verfahren zur Herstellung von Innenausstattungskomponenten von Kraftfahrzeugen dadurch gekennzeichnet, dass man als Bauteilträger 1 ein Flachs-Polypropylen-Material einsetzt. Dieses Material ist im Automobilbau weit verbreitet und daher dem Fachmann bestens bekannt.

**Erfindungsgemäß** wird als Dekorschicht 2 eine Schaumstoff-kaschierte Kunststofffolie eingesetzt. Auch dieses Material der Dekorschicht 2 ist wie das Material des Bauteilträgers 1 dem Fachmann auf dem Gebiet der Herstellung von Innenausstattungskomponenten für Kraftfahrzeuge bestens bekannt.

Besonders bevorzugt im Sinne der vorliegenden Erfindung wird als Kunststofffolie eine solche eingesetzt, die ausgewählt ist aus thermoplastischem Polyolefin, ASA, Polyvinylchlorid oder thermoplastischem Polyurethan. Diese Kunststofffolie enthält auf der Kaschierseite eine Schaumstofffolie, beispielsweise aus Polyethylen/Polypropylen.

Die Kaschiertemperatur des Bauteilträgers 1 und der Kaschierseite 4 der Dekorschicht 2 wird auf einen Wert im Bereich von 150 bis 180 °C eingestellt. Wird die Kaschiertemperatur zu hoch gewählt, so ist zu befürchten, dass die Schaumstoffstruktur der Rückseite der Dekorschicht 2 beeinträchtigt wird. Wird hingegen die Kaschiertemperatur zu niedrig gewählt, so ist eine ausreichende Verbindung des Bauteilträgers 1 mit der Dekorschicht 2 nicht zu erwarten.

Die Narbtemperatur der Sichtseite der Dekorschicht wird im Bereich von 200 bis 220 °C eingestellt. Maßgebend für die einzustellende Temperatur ist auch hier das Material der Dekorschicht 2, wobei die Narbtemperatur regelmäßig oberhalb der Erweichungstemperatur der Dekorschicht 2 liegen sollte.

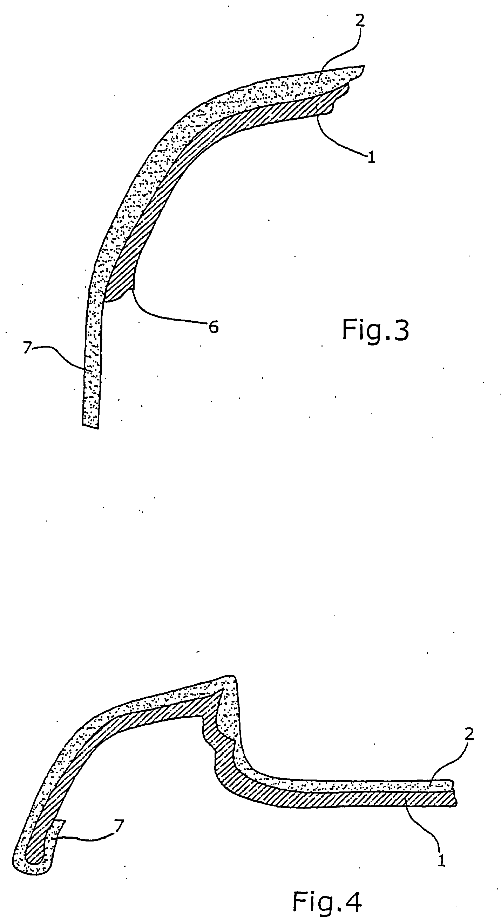

Eine weitere bevorzugte Ausführungsform der vorliegenden Erfindung besteht darin, dass man eine Dekorschicht 2 mit einer Fläche einsetzt, die die Trägerkante 6 des Bauteilträgers 2 überragt, wie dies in der Fig. 3 dargestellt wird.

In einem weiteren Verfahrensschritt wird die Dekorschicht 2 um die Trägerkante 6 gefaltet, wie dies in der Fig. 4 dargestellt wird.

Ein über das Bauträgerteil 1 hinausragender Anteil 7 der Dekorschicht 2 wird durch das Vorziehen der Oberwerkzeugs im gleichen Schritt mitgenarbt. Dieser überstehende Streifen der Dekorschicht 2 wird in einem zweiten Schritt um die Trägerkante 6 gefaltet, so dass die harte Kante am fertigen Bauteil von der geprägten Dekorschicht 2 umschlossen wird.

## Patentansprüche

1. Verfahren zur Herstellung von Innenausstattungskomponenten von Kraftfahrzeugen aus einem Bauteilträger (1) und einer damit verbundenen schaumstoffkaschierten Kunststofffolie (2) mit definiertem Oberflächenprofil, wobei man
den Bauteilträger (1) auf der Basis von naturfaserverstärkten Polymerwerkstoffen durch separate Ausformung herstellt und dessen Oberflächentemperatur auf der mit der Kunststofffolie (2) zu versehenen Oberfläche auf die gewünschte Kaschiertemperatur im Bereich von 150 bis 180 °C einstellt, **dadurch gekennzeichnet, dass** man die Sichtseite (3) der Kunststofffolie (2) auf die gewünschte Narbtemperatur im Bereich von 200 bis 220 °C und die Kaschierseite (4) der Kunststofffolie (2) auf die gewünschte Kaschiertemperatur bringt und
anschließend den Bauteilträger (1) und die Kunststofffolie (2) in einem Werkzeug verpresst, dessen Oberwerkzeug (5) eine Struktur des definierten Oberflächenprofils aufweist.

2. Verfahren nach Anspruch 1, **dadurch gekennzeichnet, dass** man als Bauteilträger (1) ein Flachs-Polypropylenmaterial einsetzt.

3. Verfahren nach Anspruch 1, **dadurch gekennzeichnet**, das man eine Kunststofffolie (2) einsetzt, die ausgewählt ist aus thermoplastischem Polyolefin, ASA, Polyvinylchlorid oder thermoplastischem Polyurethan.

4. Verfahren nach einem der Ansprüche 1 bis 3, **dadurch gekennzeichnet, dass** man eine Kunststofffolie (2) mit einer Fläche einsetzt, die die Trägerkante (6) des Bauteilträgers (2) überragt und in einen weiteren Verfahrensschritt um die Trägerkante (6) faltet.

5. Innenausstattungskomponenten, insbesondere Türverkleidungen von Kraftfahrzeugen aus einem Bauteilträger (1) aus Flachs-Polypropylenmaterial und einer damit verbundenen schaumstoffkaschierten Kunststofffolie (2) mit definiertem Oberflächenprofil erhältlich nach einem Verfahren gemäß einem der Ansprüche 1 bis 4.

## Claims

1. A method for the preparation of interior trim components of motor vehicles composed of a component support (1) and, bonded thereto, a foam-backed plastic sheet (2) having a defined surface profile, wherein
said component support (1) is prepared on the basis of natural-fiber reinforced polymer materials by separate forming, and its surface temperature on the surface to be provided with said plastic sheet (2) is adjusted to the desired backing temperature within a range of from 150 to 180 °C, **characterized in that** the viewing side (3) of said plastic sheet (2) is brought to the desired graining temperature within a range of from 200 to 220 °C and the backing side (4) of the plastic sheet (2) is brought to the desired backing temperature,
followed by pressing said component support (1) and plastic sheet (2) in a mold whose upper mold (5) has a structure of said defined surface profile.

2. The method according to claim 1, **characterized in that** a flax/polypropylene material is employed as said component support (1).

3. The method according to claim 1, **characterized in that** a plastic sheet (2) selected from thermoplastic polyolefin, ASA, polyvinyl chloride or thermoplastic polyurethane is employed.

4. The method according to any of claims 1 to 3, **characterized in that** a plastic sheet (2) is employed having a surface protruding beyond the support edge (6) of said component support (2) and, in a further process step, is folded over the support edge (6).

5. Interior trim components, especially door trims of motor vehicles, composed of a component support (1) made of a flax/polypropylene material and, bonded thereto, a foam-backed plastic sheet (2) having a defined surface profile, obtainable by a method according to any of claims 1 to 4.

## Revendications

1. Procédé de fabrication de composants d'installation intérieure de véhicules moteurs composés d'un support d'élément constructif (1) et, liée à celui-ci, une feuille plastique (2) enduite de mousse avec un profil de surface défini, dans lequel
ledit support d'élément constructif (1) est préparé à la base de matériaux polymères renforcés avec des fibres naturels par modelage séparé, et sa température de surface sur la surface à fournir avec la feuille plastique (2) est ajustée à la température d'enduction désirée dans la gamme de 150 à 180 °C, **caractérisé en ce que** l'on amène le coté visible (3) de la feuille plastique (2) à la température de grainage désirée dans la gamme de 200 à 220 °C, et que l'on amène le coté enduit (4) de la feuille plastique (2) à la température d'enduction désirée,
suivi du pressage dudit support d'élément constructif (1) et de ladite feuille plastique (2) dans un moule dont le moule supérieur (5) a une structure dudit profil de surface défini.

2. Procédé selon la revendication 1, **caractérisé en ce que** l'on utilise un matériau de lin/polypropylène comme support d'élément constructif (1).

3. Procédé selon la revendication 1, **caractérisé en ce que** l'on utilise une feuille plastique (2) choisie parmi une polyoléfine thermoplastique, l'ASA, le chlorure de polyvinyle ou le polyuréthane thermoplastique.

4. Procédé selon l'une quelconque des revendications 1 à 3, **caractérisé en ce que** l'on utilise une feuille plastique (2) avec une surface faisant saillie au-delà du bord du support (6) dudit support d'élément constructif (2) et que l'on la plie autour du bord du support (6) dans une autre étape du procédé.

5. Composants d'installation intérieure, notamment garnissages de porte, de véhicules moteurs composés d'un support d'élément constructif (1) en un matériau de lin/polypropylène et, liée à celui-ci, une feuille plastique (2) enduite de mousse avec un profil de surface défini, pouvant être obtenus par un procédé selon l'une quelconque des revendications 1 à 4.
